# EUROPÄISCHE PATENTSCHRIFT

(11) **EP 3 039 753 B1**
(45) Veröffentlichungstag und Bekanntmachung des Hinweises auf die Patenterteilung: **20.01.2021**
(21) Anmeldenummer: 14772277.1
(22) Anmeldetag: 26.08.2014
(51) Int. Cl.: H01S 3/094, G02B 6/34, H01S 3/067, G02B 6/26

(54) **VORRICHTUNG ZUM EINKOPPELN VON PUMPLICHT IN EINE FASER UND VERFAHREN ZUM HERSTELLEN EINER SOLCHEN VORRICHTUNG**
DEVICE FOR COUPLING PUMP LIGHT INTO A FIBRE AND METHOD FOR PRODUCING A DEVICE OF THIS TYPE
DISPOSITIF D'INJECTER DE LUMIÈRE DE POMPAGE DANS UNE FIBRE ET PROCÉDÉ DE FABRICATION D'UN TEL DISPOSITIF

(30) Priorität: 27.08.2013 DE 102013014277
(43) Veröffentlichungstag der Anmeldung: 06.07.2016
(73) Patentinhaber: Rosenberger Hochfrequenztechnik GmbH & Co. KG, 83413 Fridolfing (DE)
(72) Erfinder: WEIGAND, Benjamin, 67655 Kaiserslautern (DE); THEOBALD, Christian, 86153 Augsburg (DE); L'HUILLIER, Albert, Johannes, 67317 Altleiningen (DE); WURSTER, Clemens, 86167 Augsburg (DE)
(74) Vertreter: Zeitler Volpert Kandlbinder Patent- und Rechtsanwälte Partnerschaft mbB
(86) Internationale Anmeldenummer: PCT/EP2014/002327
(87) Internationale Veröffentlichungsnummer: WO 2015/028146

(56) Entgegenhaltungen:
- DE-A1-102010 004 852
- US-A1- 2003 112 497
- US-B1- 6 683 892

## Beschreibung

Die Erfindung betrifft eine Vorrichtung zum Einkoppeln von Pumplicht in eine Faser von der Seite. Die Vorrichtung weist die in einer Längsrichtung verlaufende und ein zu pumpendes, optisch aktives Medium aufweisende Faser mit einer etwa in der Längsrichtung verlaufenden Seitenwand und mindestens ein zumindest abschnittsweise parallel zu der Faser entlang der Seitenwand verlaufendes Lichteinkopplungsmittel auf.

Üblicherweise werden Faserlaser oder Faserverstärker optisch gepumpt, indem Pumplicht über eine Facette der optisch aktiven Faser in die Faser eingestrahlt wird. Hierzu muss das Pumplicht so auf die Facette der Faser gerichtet bzw. fokussiert werden, dass es in den Pumpkern (inneren Mantel) der Faser eintritt und eine Besetzungsinversion in dem von dem Pumpkern (inneren Mantel) umgebenen, optisch aktiven Signalkern der Faser erzeugt. Eine Einkopplung von Pumplicht über eine Facette der Faser kann jedoch aufgrund der geringen Querschnittsfläche des Pumpkerns, die eine exakte Justage des Pumpstrahls erfordert, schwierig sein. Ferner kann es zu hohen Feldstärken im Einkoppelbereich kommen, die die Faser beschädigen können. Eine Einkopplung über eine Facette der Faser kann außerdem problematisch sein, da das Pumplicht geeignet überlagert werden muss, wozu verschiedene Vorkehrungen wie etwa die Superposition unterschiedlicher Strahlpolarisationen oder Wellenlängen erforderlich sein können. Ferner kann durch die Einkopplung über die Facette eine stark inhomogene Pumplichtverteilung in der Faser entstehen.

Optische Fasern haben üblicherweise einen runden Querschnitt. Es gibt jedoch auch Fasern mit zumindest einer flachen Seitenwand bzw. Fasern mit "Flat", bspw. Fasern mit oktogonalem Querschnitt o. dgl. Eine Faser im Sinne der vorliegenden Offenbarung umfasst Fasern mit unterschiedlichen Querschnittsformen.

Aufgrund dieser Probleme wurde bereits die Einkopplung von Pumplicht in die Faser von der Seite vorgeschlagen. In der Druckschrift DE 10 2011 103 286 wird die transversale Einkopplung von Pumplicht in die Faser beschrieben, bei der der Pumpstrahl durch Refokussierung in einer elliptischen Pumpkammer senkrecht auf die Faser trifft. Dies ist Stand der Technik für blitzlampengepumpte Festkörperlaser. Die Einkopplungseffizienz ist jedoch hierbei oftmals nicht zufriedenstellend.

Gemäß der Druckschrift US 6,477,295 wird transversal in eine Faser eingekoppelt, indem Pumplicht zunächst in eine die gestrippte Faser umgebende Glashülse eingestrahlt wird, deren Brechungsindex an den Brechungsindex des Fasermantels angepasst ist (siehe Figuren 8 und 10). Aufgrund der großen Oberfläche der Glashülse werden hohe Feldstärken an der Grenzfläche Glas-Luft, wie sie bei der Einkopplung von Pumplicht über die Faserfacette auftreten können, vermieden und die Zerstörschwelle der Pumpanordnung erhöht. Andererseits führt diese Art der Einkopplung zu einer inhomogenen Pumplichtverteilung im Pumpkern der optischen Faser. Dasselbe gilt für die Einkopplung an einer Biegung der Faser (vgl. Fig. 6).

Die Druckschrift DE 10 2010 004 852 A1 beschreibt einen Faserlaser, bei dem an einem rohrförmigen Körper aus einem transparenten Material mindestens eine Pumpfaser angekoppelt wird, so dass Pumpstrahlung in den Körper eingekoppelt werden kann.

Die Druckschrift US 6,683,892 B1 beschreibt ein zusammengesetztes optisches Medium für eine Laservorrichtung, bei dem Pumpstrahlung von der Seite über einen Pumpwellenleiter in einen optisch aktiven Wellenleiter eingekoppelt wird.

In Anbetracht der beschriebenen Probleme ist es die Aufgabe der vorliegenden Erfindung, die Einkopplungseffizienz bei der transversalen Einkopplung von Pumplicht in eine optisch aktive Faser zu erhöhen und Pumplichtverluste zu vermeiden.

Diese Aufgabe wird durch eine Weiterbildung bekannter Pumpmodule gelöst, die im wesentlichen dadurch gekennzeichnet ist, dass das Lichteinkopplungsmittel ein Lichtwellenleiter ist, der derart optisch an die Faser gekoppelt ist, dass in dem Lichtwellenleiter propagierendes Pumplicht insbesondere durch Übersprechen von Moden und/oder durch den Überlapp evaneszenter Felder über die Seitenwand in die Faser einkoppelbar ist. Die Vorrichtung weist die weiteren Merkmale gemäß Patentanspruch 1 auf. Die Lichtwellenleiter sind in einem plattenförmigen mehrschichtigen Wafer gebildet, wobei die Vorrichtung ein an einer ebenen Seitenfläche eines Lichtwellenleiters anliegendes Einkoppelteil mit einer ebenen Anlagefläche zum Einkoppeln von Pumplicht aufweist.

Dies bewirkt eine gleichmäßige Aktivierung des optisch aktiven Mediums bzw. der laseraktiven Substanzen über die Länge der betreffenden Aktivierungsteilstrecke und führt zu einem höheren Wirkungsgrad des eingestrahlten Pumplichts.

Mit anderen Worten ist das entlang der Seitenwand der Faser und parallel dazu verlaufende Lichteinkopplungsmittel ebenso wie die Faser selbst ein Wellenleiter, der für die Propagation von Lichtmoden in der Längsrichtung der Faser eingerichtet ist. Der Übergang zwischen der Faser und dem Lichteinkopplungsmittel ist erfindungsgemäß so gestaltet, dass in dem Lichteinkopplungsmittel propagierendes Pumplicht durch Übersprechen von Moden oder durch den Überlapp evaneszenter Felder in die Faser eintritt und zu einer Besetzungsinversion im Signalkern der Faser führt. Auf diese Weise werden den in dem Wellenleiter propagierenden Moden Photonen entzogen und zur Anregung des optisch aktiven Mediums im Faserkern verwendet.

Die Erfindung geht auf die Erkenntnis zurück, dass Pumplichtverluste dadurch vermieden werden können, dass das Lichteinkopplungsmittel selbst ein Wellenleiter ist, in dem Pumplicht aufgrund der Totalreflektion an den Begrenzungsflächen praktisch verlustfrei propagieren kann, während eine effiziente Einkopplung von Pumplicht über die an das Lichteinkopplungsmittel optisch gekoppelte Seitenwand der Faser möglich ist. Zum anderen kann das Lichteinkopplungsmittel so eingerichtet sein, dass es die Pumpstrahlung von einem Pumplaser oder einer anderen Lichtquelle wirksam aufnehmen kann, wobei die Pumpstrahlung anschließend praktisch verlustfrei in die Faser einkoppelbar ist.

Aufgrund der optischen Ankopplung des Wellenleiters an die Seitenwand der Faser kann die von dem Wellenleiter unterstützte Modenstruktur derart geändert sein bzw. ein im Querschnitt in Richtung auf die Faser verschobenes Intensitätsprofil aufweisen, dass Leck- und/oder Strahlungsmoden des Wellenleiters besonders effizient in die Faser einkoppeln. Alternativ oder zusätzlich kann der Wellenleiter so gestaltet und an die Seitenwand der Fasern angekoppelt sein, dass die Propagation von in Faser und Wellenleiter gleichzeitig propagierenden Supermoden möglich ist. Diesen Supermoden werden während ihrer Propagation in Längsrichtung durch Erzeugung einer Besetzungsinversion im Signalkern Photonen entzogen und der Lasermode im Signalkern zugeführt.

Die "optische Ankopplung" des Wellenleiters an die Seitenwand bedeutet nicht notwendigerweise ein körperliches Anliegen des Wellenleiters an der Seitenwand der Faser. Vielmehr ist auch bei einem (geringen) Zwischenraum bspw. durch evaneszente Felder eine Einkopplung von Pumplicht möglich. Vorzugsweise sind die Seitenwand und die äußere Begrenzungsfläche des Wellenleiters jedoch zumindest abschnittsweise in direktem Kontakt. Der Wellenleiter kann in seiner Gestaltung, seinen Abmessungen, Materialeigenschaften, Oberflächenstruktur etc. derart an die Faser angepasst sein, dass ein besonders effizientes Übersprechen von im Wellenleiter propagierenden Moden in die Faser erfolgt.

Der Wellenleiter erstreckt sich vorzugsweise über eine längere Wegstrecke hinweg in der Längsrichtung neben der Faser, wobei die Wegstrecke in ihrer Abmessung derart angepasst sein kann, dass praktisch das gesamte im Wellenleiter propagierende Pumplicht in Laserlicht im Signalkern der Faser umgewandelt wird. Die Abmessung des Wellenleiters in Längsrichtung ist vorzugsweise mehr als 5-mal so groß wie der Durchmesser der Faser, besonders bevorzugt mehr als 10-mal so groß, insbesondere 20-mal so groß oder mehr.

In einer besonders bevorzugten Ausführungsform ist der Lichtwellenleiter ein Wellenleiter mit zumindest einer ebenen äußeren Begrenzungsfläche wie etwa ein Kantenwellenleiter oder eine optische Faser mit Flat. Der Lichtwellenleiter kann alternativ auch eine optische Faser mit rundem oder elliptischem Querschnitt sein. Im Falle einer ebenen äußeren Begrenzungsfläche des Wellenleiters kann das Pumplicht der Pumplichtquelle besonders effizient über diese ebene Fläche in den Wellenleiter eingekoppelt werden und über eine der Seitenwand der Faser zugewandte weitere äußere Begrenzungsfläche weiter in die Faser eingekoppelt werden. Auch diese weitere äußere Begrenzungsfläche kann flach sein, um die Einkopplungseffizienz in die Faser zu erhöhen.

Ein Kantenwellenleiter ist kostengünstig herstellbar und eignet sich aufgrund der sich darin ausbildenden Modenstruktur besonders gut als Einkopplungsmittel in eine Faser, insbesondere in eine Faser mit zumindest einer flachen Seitenwand wie etwa eine Faser mit Flat.

Vorzugsweise entspricht der Durchmesser des Wellenleiters im Wesentlichen dem Durchmesser der Faser. Besonders bevorzugt ist der Durchmesser der Faser und des Wellenleiters größer als 200 µm und kleiner als 1000 µm, insbesondere größer als 300 µm und kleiner als 500 µm, bspw. etwa 400 µm. Der Signalkern der Faser kann einen Durchmesser zwischen 10 µm und 100 µm, insbesondere etwa 50 µm aufweisen. Alternativ kann die Faser eine Faser mit besonders großem Kerndurchmesser sein, wie etwa ein Kerndurchmesser von mehr als 100 µm und weniger als 300 µm, insbesondere etwa 150 µm. Auch Single-Mode Fasern mit besonders kleinem Kerndurchmesser sind vorstellbar (bspw. Kerndurchmesser <10 µm).

Die Seitenwand der Faser kann an einer äußeren Begrenzungsfläche des Lichtwellenleiters anliegen. Dies führt zu einem besonders ausgeprägten Übersprechen der Moden (Mode Crosstalk). Alternativ oder zusätzlich kann ein Zwischenraum zwischen der Seitenwand der Faser und einer der Seitenwand zugewandten äußeren Begrenzungsfläche des Lichtwellenleiters mit einem bevorzugt brechungsindexangepassten, lichtdurchlässigen Medium wie etwa einem SmartGel® (bzw. mit einem anderen lichtdurchlässigen polymerhaltigen Medium) ausgefüllt sein. Hierdurch kann die Einkopplungseffizienz in die Faser weiter verbessert werden.

In einer besonders bevorzugten Ausführungsform kontaktiert die Seitenwand der Faser die äußere Begrenzungsfläche des Wellenleiters, wobei zwischen Seitenwand und äußerer Begrenzungsfläche aufgrund einer äußeren Krümmung der Faser verbleibende Zwischenräume mit einem brechungsindexangepassten Medium ausgefüllt sind. Das Medium kann in gelartiger Form in den Zwischenraum eingebracht werden und anschließend gehärtet werden. Ein gutes Übersprechen von Moden zwischen Wellenleiter und Faser ergibt sich dann, wenn das Medium etwa denselben Brechungsindex aufweist wie der Fasermantel und/oder der Wellenleiter.

Die Seitenwand der optischen Faser, über die die Pumplicht-Einkopplung erfolgt, kann eben sein. Mit anderen Worten kann die optische Faser zumindest einen Flat aufweisen.

Die Einkopplungseffizienz in die Faser kann weiter verbessert werden, wenn eine der Seitenwand der Faser zugewandte äußere Begrenzungsfläche des Lichtwellenleiters strukturiert ist. Insbesondere kann eine Amplitudenmodulation in die äußere Begrenzungsfläche des Wellenleiters eingeschrieben sein, die ein wellenartiges, gezacktes und/oder sägezahnartiges Querschnittsprofil nach Art eines "blazed gratings" aufweisen kann. Die Modulation kann bei der Herstellung des Lichtwellenleiters durch Laserablation in die Wand des Lichtwellenleiters eingeschrieben werden oder bei der Herstellung des Lichtwellenleiters im Sol-Gel-Prozess durch gezielte Abformung herbeigeführt werden. Die Periodizität der Modulation kann an die Wellenlänge des Pumplichts angepasst sein.

Ferner können die Faser und/oder der Lichtwellenleiter eine Brechungsindexmodulation aufweisen, durch die die Einkopplungseffizienz in die Faser erhöht wird (Erzeugung von Volume Bragg Gratings bzw. Tilted Fiber Bragg Gratings). Die Brechungsindexmodulation kann in einer dem Fachmann bekannten Art und Weise mittels UV-Strahlung eingeschrieben werden.

Es hat sich im Hinblick auf eine hohe Pumpstrahlungsdichte unter Vermeidung der Ausbildung sogenannter Hot-Spots als sinnvoll erwiesen, zwei Lichtwellenleiter auf einander entgegengesetzten Seiten der Faser anzuordnen. In einer besonders bevorzugten Ausführungsform ist die Faser zwischen zwei etwa parallel dazu verlaufenden Kantenwellenleitern angeordnet. In den beiden Kantenwellenleitern propagierendes Pumplicht kann dann auf einander entgegengesetzten Faserseiten über die Seitenwand in der Faser eingekoppelt werden.

Im Hinblick auf eine kompakte Ausgestaltung der Vorrichtung bei gleichzeitiger Erhöhung der zu erzielenden Laserleistung im Kern hat es sich als sinnvoll erwiesen, zwei oder mehr jeweils in der Längsrichtung verlaufende, nebeneinander angeordnete Pumpabschnitte der Faser vorzusehen, zwischen denen jeweils ein Lichtwellenleiter angeordnet ist. Zu diesem Zweck kann die Faser windungsförmig angeordnet sein, wobei jede Windung einen oder mehrere hintereinander angeordnete Pumpabschnitte aufweist. Vorzugsweise weist die Faser zur Erhöhung der im Kern zu erzielenden Laserleistung mehr als zwei, besonders bevorzugt mehr als zehn Windungen mit jeweils einem oder mehr Pumpabschnitten auf. Durch die Anordnung der Lichtwellenleiter zwischen den einzelnen Pumpabschnitten der Faser ist eine effiziente Einkopplung von Pumplicht in die Faser möglich. Hierzu können sich die Pumpabschnitte der Faser und die Lichtwellenleiter in einer quer, insbesondere etwa senkrecht zu der Längsrichtung verlaufenden Richtung abwechseln. Mit anderen Worten ist eine Anordnung parallel verlaufender Lichtwellenleiter und Faserabschnitte gebildet, die sich in der Querrichtung periodisch abwechseln, so dass insgesamt ein kompaktes Pumpmodul entsteht, das die räumlich konzentrierte Einkopplung von Pumplicht einer Pumplichtquelle ermöglicht. Insbesondere kann ein einziges Pumplichtbündel mit entsprechend eingerichtetem Bündeldurchmesser auf mehrere nebeneinander angeordnete Wellenleiter treffen, so dass die einzelnen Windungen der Faser gleichzeitig gepumpt werden. Hierdurch wird eine Justage des optischen Gesamtsystems vereinfacht.

Die Faser kann einen Kern mit dem optisch aktiven Medium und einen den Kern umgebenden (inneren) Mantel mit der Seitenwand als äußerer Begrenzung aufweisen, wobei der Brechungsindex des Mantels an den Brechungsindex des Lichtwellenleiters angepasst sein kann. Der Kern der Faser kann aus einem bevorzugt seltenerdendotierten (bspw. mit Ytterbium oder Erbium) Quarzglas bestehen. Der Mantel der Faser kann vor und/oder nach den Pumpabschnitten der Faser von einer oder mehreren Schutzschichten aus Kunststoff ("Coating" oder "Buffer") umgeben sein, die weiterhin regelmäßig von einer Schutzhülle ("Jacket") umgeben sein kann. Falls der Kern von mehreren Mänteln (bspw. einem inneren und einem äußeren Mantel) umgeben ist, nehmen die Brechungsindizes der einzelnen lichtführenden Teile (Kern, innerer Mantel, äußerer Mantel etc.) in der Regel von innen nach außen ab, so dass die im inneren, lichtführenden Teil propagierenden Moden jeweils infolge der Totalreflexion ohne Verluste in Längsrichtung propagieren. Durch die Brechungsindexanpassung von Mantelmaterial der Faser und Wellenleitermaterial wird das Übersprechen der Pumplichtfelder zwischen Faser und Wellenleiter verstärkt. Bspw. können sowohl der Fasermantel als auch der Wellenleiter aus Quarzglas (n=1,45) bestehen.

Zum Einkoppeln von Pumplicht in den Lichtwellenleiter ist ein an eine Seitenfläche des Lichtwellenleiters optisch gekoppeltes und an der Seitenfläche anliegendes Einkoppelteil vorgesehen. Dabei ist zum Erhöhen der einzukoppelnden Lichtleistung sowohl die Seitenfläche des Lichtwellenleiters als auch die Anlagefläche des Einkoppelteils eben. Das Material des Einkoppelteils kann einen höheren Brechungsindex aufweisen als das Material des Lichtwellenleiters. Die Abmessung des Einkoppelteils in Längsrichtung ist so bemessen, dass bereits in den Wellenleiter eingekoppeltes Licht nicht erneut auf die Grenzfläche von Einkoppelteil und Lichtwellenleiter trifft, sondern aufgrund Totalreflexion in den Wellenleiter rückreflektiert wird.

Als besonders geeignetes Einkoppelteil hat sich ein Prisma erwiesen, da kostengünstige Freistrahllaserdioden als Pumplichtquellen verwendet werden können, und auf der gesamten Breite des Prismas in den Lichtwellenleiter und die Faser eingekoppelt werden kann. Der Divergenzwinkel und der Einstrahlwinkel des auf das Prisma treffenden Pumplichtbündels und die Prismenwinkel sind so eingerichtet, dass möglichst alle innerhalb des Prismas auf die Grenzfläche zwischen Prisma und Wellenleiter treffenden Pumpstrahlen in den Wellenleiter eingekoppelt werden, aber im Verlauf ihrer Propagation im Inneren des Wellenleiters kein zweites Mal auf die Grenzfläche zwischen Prisma und Wellenleiter treffen. Auf diese Weise werden eine Rückstrahlung von Pumpstrahlung von dem Wellenleiter zurück in das Prisma und damit Pumplichtverluste vermieden.

Das Einkoppelteil kann zwei oder mehr in einer Querrichtung nebeneinander angeordnete Lichtwellenleiter überdecken. Somit kann ein einziges auf das Einkoppelteil treffendes Pumplichtbündel in mehrere Lichtwellenleiter eingekoppelt werden, wodurch die Justage der Gesamtanordnung vereinfacht wird und eine kompakte Vorrichtung entsteht.

Im Hinblick auf eine einfache Justage und zum Erhalten einer mechanisch stabilen Gesamtvorrichtung ha t es sich als zweckmäßig erwiesen, dass zwei oder mehr Lichtwellenleiter nebeneinander an einem gemeinsamen Substrat befestigt sind, wobei der Übergang zwischen den Lichtwellenleitern und dem Substrat derart eingerichtet ist, dass Totalreflexion im Inneren der Lichtwellenleiter an dem Übergang auftritt.

Falls die erfindungsgemäße Vorrichtung das Pumpmodul eines Faserlasers ist, kann der Resonator durch in die Faser eingeschriebene Faser-Bragg-Gitter (FBG) begrenzt sein. Hinter den Output Coupler können weitere Verstärkerstufen kaskadenartig geschaltet sein. Falls eine der Verstärkerstufen ein Faserverstärker ist, kann eine weitere erfindungsgemäße Vorrichtung auch als Pumpmodul des Faserverstärkers eingesetzt werden.

Auf einer Oberseite und/oder auf einer Unterseite der erfindungsgemäßen Vorrichtung können Kühlplatten zum effizienten Abführen von Wärme angeordnet sein. Hierdurch wird die thermische Belastung gering gehalten. Die Kühlplatten können aus Metall gefertigt sein. Alternativ oder zusätzlich kann das Substrat als Kühlplatte ausgebildet sein oder eine Kühlplatte aufweisen. Die Kühlplatten können an einen heat sink angeschlossen sein, der luft- oder flüssigkeitsgekühlt sein kann.

Die Erfindung umfasst ferner ein Verfahren zum Herstellen einer erfindungsgemäßen Vorrichtung mit den Merkmalen gemäß Patentanspruch 13, bei dem nebeneinander verlaufende Lichtwellenleiter in einem plattenförmiger Wafer gebildet werden und anschließend eine Faser mit einem optisch aktiven Medium als Kernmaterial formschlüssig in den zwischen den Lichtwellenleitern gebildeten Zwischenraum eingelegt wird. Vorzugsweise werden mehrere Windungen der Faser in die Zwischenräume zwischen mehreren nebeneinander gefertigten Lichtwellenleitern eingelegt. Die Fertigung der Lichtwellenleiter, vorzugsweise in Form von Kantenwellenleitern, kann durch Laserablation, durch mechanische Abtragungsverfahren wie etwa Sägen oder Fräsen, durch Ätzprozesse und/oder durch Sol-Gel-Prozesse erfolgen.

Der Wafer ist mehrschichtig und weist eine erste Schicht aus einem optisch transparenten Material (vorzugsweise Quarzglas) auf, in dem die Lichtwellenleiter gefertigt werden, und eine zweite Schicht zur Stabilisierung wie etwa eine Siliziumschicht. Zwischen diesen beiden Schichten kann eine Zwischenschicht angeordnet sein, die einen niedrigeren Brechungsindex aufweist als das optische transparente Material, um eine Totalreflexion an der Grenzfläche zwischen optisch transparentem Material und Zwischenschicht zu ermöglichen.

Der mehrschichtige Wafer kann hergestellt werden durch Beschichtung eines ersten Wafers aus dem optisch transparenten Material mit einem Beschichtungsmaterial/Lackmaterial wie etwa Polydimethylsiloxan (PDMS, n=1,43), dessen Brechungsindex niedriger ist als der Brechungsindex des transparenten Materials, und anschließendes Auflegen eines zweiten Wafers zur mechanischen Stabilisierung. Durch anschließendes Backen werden die beiden Wafer miteinander verbunden.

Alternativ kann die zweite Schicht einen geringeren Brechungsindex aufweisen als die erste Schicht und gleichzeitig die erste Schicht stabilisieren. Bspw. kann fluordotiertes Quarzglas o. dgl. als zweite Schicht verwendet werden, welches durch Ansprengen, Anschmelzen oder andere Fügeformen mit der ersten Schicht verbunden werden kann. Hierdurch wird die Temperaturbeständigkeit der herzustellenden erfindungsgemäßen Vorrichtung verbessert.

Vor dem Einlegen der Faser in die Zwischenräume zwischen den Lichtwellenleitern können die Zwischenräume mit einem brechungsindexangepassten Medium wie etwa einem SmartGel® aufgefüllt werden. Das Medium wird in gelartiger Form in die Zwischenräume eingebracht, anschließend wird die Faser formschlüssig unter teilweiser Verdrängung des Mediums in die Zwischenräume eingelegt, woraufhin das Medium vorzugsweise ausgehärtet wird.

Alternativ können die nebeneinander verlaufenden Wellenleiter durch ein Sol-Gel-Verfahren hergestellt werden. Hierbei wird eine Sol-Flüssigkeit, die hochreine SiO2-Teilchen in einer vorgegebenen Konzentration enthält, in eine Form gegeben, wo sie innerhalb einer bestimmten Zeit geliert. Das so entstandene nasse Gel-Teil wird der Form entnommen und getrocknet. In einem abschließenden thermischen Schritt schrumpft das Gel-Teil und nimmt dabei exakt die Soll-Abmessungen ein. Die Form ist so gestaltet, dass ein transparentes Quarzglasteil entsteht, das die nebeneinander verlaufenden Wellenleiter aufweist.

Weitere Einzelheiten der Erfindung können der sich nun anschließenden Figurenbeschreibung entnommen werden. Dabei zeigt:
- Fig. 1: eine Querschnittsansicht einer erfindungsgemäßen Vorrichtung, wobei die Schnittebene senkrecht zu der Längsachse der Faser verläuft,
- Fig. 2: eine perspektivische Ansicht der Vorrichtung aus Fig. 1 in einer schematischen Darstellung, wobei Pumplicht über ein Koppelprisma in die Lichtwellenleiter der Vorrichtung eingekoppelt wird,
- Fig. 3: eine Querschnittsansicht der Vorrichtung aus Fig. 1 wobei die Längsachse der Faser in der Schnittebene verläuft.

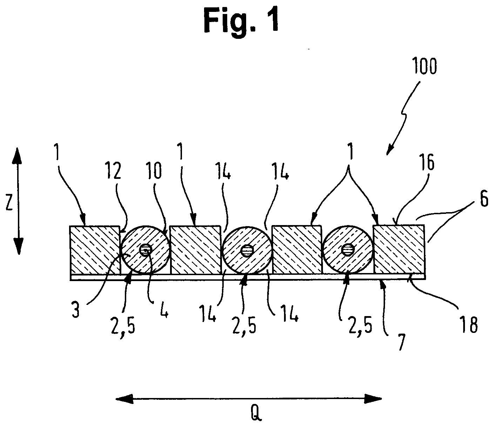

Figur 1 zeigt eine erfindungsgemäße Vorrichtung 100 zum Einkoppeln von Pumplicht in eine Faser 2 in einer etwa senkrecht zu der Längsrichtung L der Faser 2 verlaufenden Querschnittsansicht. Die Faser weist einen Kern 4 mit einem optisch aktiven Material wie etwa einem seltenerdendotiertem Quarzglas und einen den Kern 4 umgebenden (inneren) Mantel 3 ("cladding") auf. Die erfindungsgemäße Vorrichtung kann ein Teil eines Faserlasers oder eines Faserverstärkers sein. Der Laserresonator des Faserlasers kann in bekannter Weise durch Faser-Bragg-Gitter begrenzt sein. Einzelheiten des Aufbaus eines Faserlasers sind in der einschlägigen Fachliteratur beschrieben.

Die Faser 2 ist in mehreren Windungen 5 angeordnet, wobei jede Windung 5 mindestens einen Pumpabschnitt aufweist, in dem von der Seite (transversal) Pumplicht 8 in die Faser eingekoppelt wird. Die Querschnittansicht der Fig. 1 verläuft durch diese Pumpabschnitte der Faser.

Die Einkopplung des Pumplichts 8 erfolgt über neben den Pumpabschnitten der Faser 2 und parallel dazu verlaufende Wellenleiter 1. Die Längsrichtung L der Wellenleiter und damit die Propagationsrichtung des in den Wellenleitern 1 verlaufenden Pumplichts entspricht also im Wesentlichen der Längsrichtung L der Faser 2 und damit der Propagationsrichtung der im Kern 4 zu erzeugenden Laserstrahlung. Die Wellenleiter 1 sind derart optisch an eine Seitenwand 10 der Faser angekoppelt, dass ein Übersprechen von Moden des in den Wellenleitern propagierenden Pumplichts 8 in die Faser stattfindet. Insbesondere kann das Übersprechen des Pumplichts in den Fasermantel 3 über die Seitenwand 10 durch Strahlungs-, Leck- und/oder Supermoden erfolgen, die von der Wellenleiter-Faser-Anordnung unterstützt werden. Auch evaneszente Lichtfelder können von dem Wellenleiter 1 in den Fasermantel 3 überkoppeln. Die Pumpstrahlung koppelt zwischen den Wellenleitern 1 und den Pumpabschnitten der Faser 2 hin und zurück, wodurch immer mehrere Pumpabschnitte gleichzeitig gepumpt werden.

Die räumliche Beschränkung der Pumpstrahlung innerhalb der Gesamtstruktur aus Faser 2 und Wellenleitern 1 erfolgt in der Querrichtung Q wie auch in der Vertikalrichtung Z durch Totalreflexion an der Grenzfläche zwischen Wellenleitern bzw. Faser und umgebendem Medium 6 bzw. durch Totalreflexion an der Grenzfläche zwischen Wellenleitern bzw. Faser und einem Substrat 7, an die nebeneinander verlaufenden Wellenleiter 1 befestigt sind.

Das Mantelmaterial der Faser 2 und das Wellenleitermaterial haben im Wesentlichen dieselben Brechungsindizes. Sowohl der Mantel als auch die Wellenleiter können bspw. aus Quarzglas (bzw. SiO₂, n=1,45) gebildet sein.

Wie in Fig. 1 dargestellt ist, weist die erfindungsgemäße Vorrichtung zahlreiche nebeneinander verlaufende Wellenleiter 1 auf, zwischen denen jeweils eine Faserwindung 5 derart formschlüssig eingelegt ist, dass die Faserwand 10 an einer äußeren Begrenzungsfläche 12 der Wellenleiter 1 anliegt. Somit ist eine periodische Anordnung gebildet, in der sich die Wellenleiter und die Pumpabschnitte der Faser 2 in der Querrichtung Q abwechseln.

Die Wellenleiter 1 sind dielektrische Kantenwellenleiter mit etwa quadratischem Querschnitt. Andere Querschnittsformen sind alternativ ebenso vorstellbar. Kantenwellenleiter haben jedoch den Vorteil einer einfachen Herstellbarkeit, weisen eine ebene Deckfläche 16 auf, die sich besonders gut zum Einkoppeln von Pumplicht einer Pumplichtquelle (bspw. eines Diodenlasers) eignet, und haben eine ebene Bodenfläche 18, die sich besonders gut zum Befestigen an dem gemeinsamen Substrat 7 eignet.

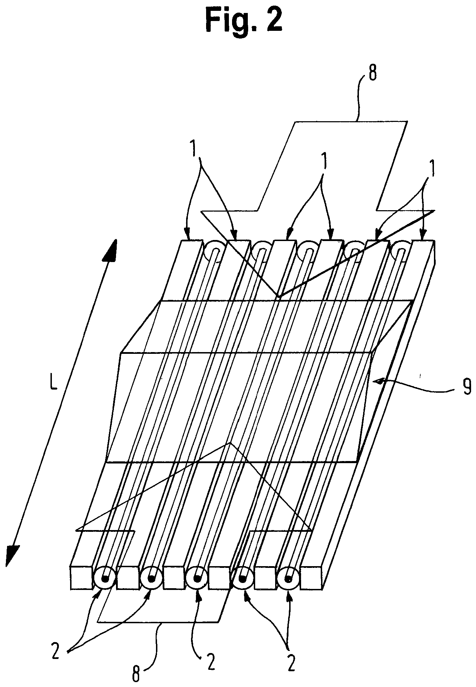

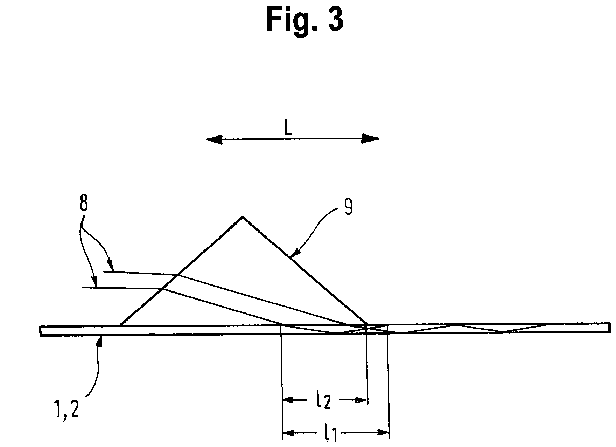

Die Zuführung des Pumplichts 8 in die Wellenleiter 1 wird nun anhand der Figuren 2 und 3 beschrieben.

Ein Prisma 9 mit ebener Grundfläche wird in optischen Kontakt mit den ebenen Deckflächen 16 mehrerer nebeneinander verlaufender Wellenleiter 1 gebracht. Durch Verwendung des Prismas 9 können kostengünstige Freistrahllaserdioden verwendet werden, da auf der gesamten Breite des Prismas 9 in die Wellenleiter 1 und in die Faserwindungen 5 gekoppelt wird. Der Brechungsindex des Prismenmaterials (bspw. N-BK7, n=1,51) ist vorzugsweise höher als der Brechungsindex des Wellenleitermaterials.

Pumpstrahlung wird über mindestens eine Seitenfläche des Prismas 9 in das Prisma eingestrahlt und in Richtung auf die Deckfläche 16 der Wellenleiter gebrochen. Die Pumpstrahlung tritt dann von der Seite in die Wellenleiter 1 ein. Die Abmessung des Prismas in der Längsrichtung L ist derart eingerichtet, dass in die Wellenleiter eingebrachte Pumpstrahlung nach Totalreflexion an der unteren Begrenzungsfläche 18 des Wellenleiters nicht wieder an der oberen Begrenzungsfläche des Wellenleiters zurück in das Prima 9 tritt (vgl. Fig. 3).

Im Folgenden wird ein Verfahren zur Herstellung der erfindungsgemäßen Vorrichtung 100 beschrieben:
Ein Quarzglas-Wafer wird auf einer Seite mit PDMS (oder einer anderen geeigneten Beschichtung) beschichtet und mit dieser Seite auf einen Silizium-Wafer gelegt, der die Struktur mechanisch stabilisieren soll. Beide Wafer werden gemeinsam gebacken. Das PDMS wird fest und verbindet die beiden Wafer miteinander. Der Quarzglas-Wafer wird in seiner Höhe bis auf den Durchmesser des Fasermantels 3 poliert. In dem Quarzglas-Wafer werden durch hochpräzise Laserablation parallel verlaufende Kantenwellenleiter erzeugt. Durch Anpassung des Pulsüberlapps der Laserstrahlung, die zur Erzeugung der Kantenwellenleiter eingesetzt wird, kann gezielt eine Amplitudenmodulation der seitlichen äußeren Begrenzungsflächen 12 der Kantenwellenleiter 1 herbeigeführt werden. In die Zwischenräume zwischen den Kantenwellenleitern wird die Faser 2 in mehreren Windungen 5 formschlüssig eingelegt. Die äußersten Grenzschichten der Gesamtstruktur werden in optischer Qualität poliert. Auf einen mehrere Kantenwellenleiter in der Querrichtung Q übergreifenden Bereich der periodischen Struktur mit eingelegter Faser 2 wird das Prisma 9 zur Einkopplung von Pumpstrahlung aufgebracht.

Alternativ können die Kantenwellenleiter und/oder das Prisma 9 via Sol-Gel-Verfahren hergestellt werden. In diesem Fall kann die Amplitudenmodulation der seitlichen äußeren Begrenzungsflächen 12 der Kantenwellenleiter durch gezielte Abformung herbeigeführt werden.

Der Brechungsindex der Seitenwände kann durch Laserstrahlung induziert moduliert werden.

Die Erfindung ist nicht auf die in den Figuren gezeigte Ausführungsform beschränkt. Vielmehr können bspw. anstelle der gezeigten Kantenwellenleiter andere Arten von Wellenleitern verwendet werden, wie etwa Fasern oder plattenförmige Wellenleiter (Slab Waveguides), in denen die Propagation des Pumplichts nur in einer Dimension eingeschränkt ist (nämlich in der senkrecht zu der Längsrichtung L und senkrecht zu der Querrichtung Q verlaufenden Vertikalrichtung Z). Bspw. können mehrere nebeneinander verlaufende Pumpabschnitte der Faser in einen solchen Slab Waveguide eingebettet sein. Die Vorrichtung kann in diesem Fall bspw. im Sol-Gel-Verfahren durch Einbetten der Faser in ein gelartiges, dielektrisches, flaches Medium und ggf. anschließendes Härten hergestellt werden. Weitere Ausführungsformen sind vorstellbar.

## Patentansprüche

1. Vorrichtung zum Einkoppeln von Pumplicht (8) in eine Faser (2) von der Seite mit der in einer Längsrichtung (L) verlaufenden und ein zu pumpendes, optisch aktives Medium (4) aufweisenden Faser (2) mit einer etwa in der Längsrichtung (L) verlaufenden Seitenwand (10) und mit mindestens einem zumindest abschnittsweise parallel zu der Faser (2) entlang der Seitenwand (10) verlaufenden Lichteinkopplungsmittel,
wobei das Lichteinkopplungsmittel ein Lichtwellenleiter (1) ist, der derart optisch an die Faser (2) gekoppelt ist, dass in dem Lichtwellenleiter (1) propagierendes Pumplicht (8) insbesondere durch Übersprechen von Moden oder durch den Überlapp evaneszenter Felder über die Seitenwand (10) in die Faser einkoppelt, wobei die Faser zwei oder mehr jeweils in der Längsrichtung (L) verlaufende, nebeneinander angeordnete Pumpabschnitte aufweist, zwischen denen jeweils ein Lichtwellenleiter (1) angeordnet ist,
**dadurch gekennzeichnet, dass** die Lichtwellenleiter (1) in einem plattenförmigen Wafer gebildet sind, der eine Schicht aus einem optisch transparenten Material, in dem die Lichtwellenleiter gefertigt sind, und eine weitere Schicht zur Stabilisierung aufweist,
wobei die Vorrichtung ein an einer ebenen Seitenfläche (16) eines Lichtwellenleiters anliegendes Einkoppelteil (9) mit einer ebenen Anlagefläche zum Einkoppeln von Pumplicht in den Lichtwellenleiter aufweist.

2. Vorrichtung nach Anspruch 1, **dadurch gekennzeichnet, dass** der Lichtwellenleiter (1) ein Wellenleiter mit zumindest einer ebenen äußeren Begrenzungsfläche wie etwa ein Kantenwellenleiter oder eine optische Faser mit Flat ist.

3. Vorrichtung nach Anspruch 1 oder 2, **dadurch gekennzeichnet, dass** die Seitenwand (10) der Faser an einer äußeren Begrenzungsfläche (12) des Lichtwellenleiters anliegt und/oder ein Zwischenraum zwischen der Seitenwand (10) der Faser und einer der Seitenwand zugewandten äußeren Begrenzungsfläche (12) des Lichtwellenleiters mit einem brechungsindexangepassten lichtdurchlässigen Medium (14) wie etwa einem polymerhaltigen Medium, insbesondere einem SmartGel® ausgefüllt ist.

4. Vorrichtung nach einem der vorhergehenden Ansprüche, **dadurch gekennzeichnet, dass** eine der Seitenwand (10) der Faser zugewandte äußere Begrenzungsfläche (12) des Lichtwellenleiters zum Erhöhen der Einkopplungseffizienz strukturiert ist, insbesondere eine Amplitudenmodulation aufweist.

5. Vorrichtung nach einem der vorhergehenden Ansprüche, **gekennzeichnet durch** eine Brechungsindexmodulation in der Faser (2) und/oder in dem Lichtwellenleiter (1) zum Erhöhen einer Einkopplungseffizienz in die Faser.

6. Vorrichtung nach einem der vorhergehenden Ansprüche, **gekennzeichnet durch** zwei auf einander entgegengesetzten Seiten der Faser angeordnete Lichtwellenleiter (1), bevorzugt in Form von Kantenwellenleitern.

7. Vorrichtung nach einem der vorhergehenden Ansprüche, **dadurch gekennzeichnet, dass** sich die Pumpabschnitte der Faser und die Lichtwellenleiter in einer quer, insbesondere etwa senkrecht zu der Längsrichtung verlaufenden Richtung (Q) periodisch abwechseln.

8. Vorrichtung nach einem der vorhergehenden Ansprüche, **dadurch gekennzeichnet, dass** die Faser (2) windungsförmig angeordnet ist, wobei jede Windung (5) einen Pumpabschnitt aufweist.

9. Vorrichtung nach einem der vorhergehenden Ansprüche, **dadurch gekennzeichnet, dass** die Faser einen Kern (4) mit dem optisch aktiven Medium und einen den Kern umgebenden Mantel (3) mit der Seitenwand (10) aufweist, dessen Brechungsindex an den Brechungsindex des Lichtwellenleiters (1) angepasst ist.

10. Vorrichtung nach einem der vorhergehenden Ansprüche, **dadurch gekennzeichnet, dass** das Einkoppelteil (9) ein Koppelprisma ist.

11. Vorrichtung nach einem der vorhergehenden Ansprüche, **dadurch gekennzeichnet, dass** das Einkoppelteil (9) zwei oder mehr in einer Querrichtung nebeneinander angeordnete Lichtwellenleiter (1) überdeckt.

12. Vorrichtung nach einem der vorhergehenden Ansprüche, **dadurch gekennzeichnet, dass** zwei oder mehr Lichtwellenleiter nebeneinander an einem gemeinsamen Substrat (7) befestigt sind, wobei der Übergang zwischen den Lichtwellenleitern (1) und dem Substrat (7) derart eingerichtet ist, dass Totalreflexion im Inneren der Lichtwellenleiter (1) an dem Übergang auftritt.

13. Verfahren zum Herstellen einer Vorrichtung nach einem der Ansprüche 1 bis 12, **dadurch gekennzeichnet, dass** nebeneinander verlaufende Lichtwellenleiter (1) in einem plattenförmigen Wafer erzeugt werden, der eine Schicht aus einem optisch transparenten Material, in dem die Lichtwellenleiter gefertigt werden, und eine weitere Schicht zur Stabilisierung aufweist, und anschließend eine Faser (2) mit einem optisch aktiven Kern (4) formschlüssig in die zwischen den Lichtwellenleitern (1) gebildeten Zwischenräume eingelegt wird, und an einer ebenen Seitenfläche (16) des mindestens einen Lichtwellenleiters ein Einkoppelteil (9) mit einer ebenen Anlagefläche zum Einkoppeln von Pumplicht in den Lichtwellenleiter angelegt wird.

14. Verfahren nach Anspruch 13, **dadurch gekennzeichnet, dass** die Lichtwellenleiter (1) durch Laserablation, Ätzen und/oder mechanische Bearbeitungsverfahren wie etwa Fräsen oder Sägen in dem Wafer erzeugt werden.

15. Verfahren nach Anspruch 13 oder 14, **dadurch gekennzeichnet, dass** vor dem Einlegen der Faser (2) ein brechungsindexangepasstes, bevorzugt gelartiges Medium (14) in die Zwischenräume zwischen den Lichtwellenleitern (1) gegeben wird.

## Claims

1. Device for laterally coupling pump light (8) into a fibre (2) comprising the fibre (2) which runs in a longitudinal direction (L) and which has an optically active medium (4) to be pumped, with a lateral wall (10) running approximately in the longitudinal direction (L) and with at least one light coupling means, at least some part of which runs parallel to the fibre (2) along the lateral wall (10), wherein the light coupling means is an optical waveguide (1) which is optically coupled to the fibre (2) such that pump light (8) propagating in the optical waveguide (1) can be coupled into the fibre via the lateral wall (10), in particular by means of mode crosstalk, or by the overlap of evanescent fields, wherein the fibre has two or more pump sections, each running in the longitudinal direction (L) and arranged next to one another, between which an optical waveguide (1) is in each case arranged, **characterised in that** the optical waveguides (1) are formed in a plate-formed wafer having a first layer consisting of an optically transparent material in which the optical waveguides are created, and a second layer for stabilisation,
wherein the device includes a coupling part (9) with a flat contact surface for coupling pump light into the optical waveguide which lies against a flat lateral surface (16) of an optical waveguide.

2. Device according to claim 1, **characterised in that** the optical waveguide (1) is a waveguide with at least one flat outer boundary surface such as a ridge waveguide or an optical fibre with flat.

3. Device according to claim 1 or 2, **characterised in that** the lateral wall (10) of the fibre lies in contact with an outer boundary surface (12) of the optical waveguide and/or an intermediate space between the lateral wall (10) of the fibre and an outer boundary surface (12) of the optical waveguide facing the lateral wall is filled with a refractive-index-matched translucent medium (14) such as a polymer-containing medium, in particular a SmartGel®.

4. Device according to one of the preceding claims, **characterised in that,** in order to increase the efficiency of coupling, an outer boundary surface (12) of the optical waveguide facing the lateral wall (10) of the fibre is structured, in particular displaying an amplitude modulation.

5. Device according to one of the preceding claims, **characterised by** a refractive index modulation in the fibre (2) and/or in the optical waveguide (1) in order to increase the efficiency of coupling into the fibre.

6. Device according to one of the preceding claims, **characterised by** two optical waveguides (1) arranged on opposite sides of the fibre, preferably in the form of ridge waveguides.

7. Device according to one of the preceding claims, **characterised in that** the pump sections of the fibre and the optical waveguides alternate periodically in a direction (Q) transverse, in particular roughly perpendicular, to the longitudinal direction.

8. Device according to one of the preceding claims, **characterised in that** the fibre (2) is arranged in windings, wherein each winding (5) contains a pump section.

9. Device according to one of the preceding claims, **characterised in that** the fibre has a core (4) with the optically active medium and a cladding (3) surrounding the core with the lateral wall (10), the refractive index of which is matched to the refractive index of the optical waveguide (1).

10. Device according to one of the preceding claims, **characterised in that** the coupling part (9) is a coupling prism.

11. Device according to one of the preceding claims, **characterised in that** the coupling part (9) covers two or more optical waveguides (1) arranged next to one another in a transverse direction.

12. Device according to one of the preceding claims, **characterised in that** two or more optical waveguides are fixed next to one another on a common substrate (7), wherein the transition between the optical waveguides (1) and the substrate (7) is configured such that total reflection occurs within the interior of the optical waveguide (1) at the transition.

13. Method for manufacturing a device according to one of the claims 1 to 12, **characterised in that** optical waveguides (1) running next to one another are created in a plate-formed wafer having a first layer consisting of an optically transparent material in which the optical waveguides are created, and a second layer for stabilisation, and a fibre (2) with an optically active core (4) is then laid, in a form-locking manner, in the spaces formed between the optical waveguides (1), and a coupling part (9) with a flat contact surface for coupling pump light into the optical waveguide is laid against a flat lateral surface (16) of the at least one optical waveguide.

14. Method according to claim 13, **characterised in that** the optical waveguides (1) are created in the wafer through laser ablation, etching and/or mechanical machining processes such as milling or sawing.

15. Method according to claim 13 or 14, **characterised in that** a refractive-index-matched, preferably gel-like medium (14) is introduced into the spaces between the optical waveguides (1) before laying the fibre (2).

## Revendications

1. Dispositif pour injecter latéralement de la lumière de pompage (8) dans une fibre (2), comportant
la fibre (2) qui s'étend dans une direction longitudinale (L) et qui présente un milieu (4) optiquement actif à pomper,
une paroi latérale (10) s'étendant approximativement dans la direction longitudinale (L), et
au moins un moyen d'injection de lumière s'étendant au moins localement parallèlement à la fibre (2) le long de la paroi latérale (10),
dans lequel
le moyen d'injection de lumière est un guide d'onde optique (1) qui est couplé optiquement à la fibre (2) de telle manière que la lumière de pompage (8) qui se propage dans le guide d'onde optique (1) est injectée dans la fibre à travers la paroi latérale (10), en particulier par la diaphonie des modes ou par le chevauchement de champs évanescents,
la fibre comprend deux portions de pompage ou plus, qui s'étendent chacune dans la direction longitudinale (L) et qui sont disposées les unes à côté des autres, entre lesquelles est disposé un guide d'onde optique (1) respectif,
**caractérisé en ce que**
les guides d'onde optique (1) sont formés dans une plaquette (wafer) en forme de plaque qui présente une couche en un matériau optiquement transparent dans lequel sont fabriqués les guides d'onde optique, et une autre couche de stabilisation,
le dispositif comprenant une partie d'injection (9) qui s'appuie contre une surface latérale plane (16) d'un guide d'onde optique et qui présente une surface d'appui plane pour injecter la lumière de pompage dans le guide d'onde optique.

2. Dispositif selon la revendication 1,
**caractérisé en ce que** le guide d'onde optique (1) est un guide d'onde avec au moins une surface limite extérieure plane, telle qu'un guide d'onde de bord ou une fibre optique avec méplat(s).

3. Dispositif selon la revendication 1 ou 2,
**caractérisé en ce que** la paroi latérale (10) de la fibre s'appuie contre une surface limite extérieure (12) du guide d'onde optique, et/ou un intervalle entre la paroi latérale (10) de la fibre et une surface limite extérieure (12) du guide d'onde optique tournée vers la paroi latérale est rempli d'un milieu (14) perméable à la lumière et à indice de réfraction adapté, tel qu'un milieu contenant un polymère, en particulier un SmartGel®.

4. Dispositif selon l'une des revendications précédentes,
**caractérisé en ce qu'**une surface limite extérieure (12) du guide d'onde optique tournée vers la paroi latérale (10) de la fibre est structurée de manière à augmenter l'efficacité de l'injection et présente en particulier une modulation d'amplitude.

5. Dispositif selon l'une des revendications précédentes,
**caractérisé par** une modulation de l'indice de réfraction dans la fibre (2) et/ou dans le guide d'onde optique (1) pour augmenter une efficacité d'injection dans la fibre.

6. Dispositif selon l'une des revendications précédentes,
**caractérisé par** deux guides d'onde optique (1) disposés sur des côtés opposés de la fibre, de préférence sous la forme de guides d'onde de bord.

7. Dispositif selon l'une des revendications précédentes,
**caractérisé en ce que** les portions de pompage de la fibre et les guides d'onde optique alternent périodiquement dans une direction (Q) s'étendant transversalement, en particulier approximativement perpendiculairement à la direction longitudinale.

8. Dispositif selon l'une des revendications précédentes,
**caractérisé en ce que** la fibre (2) est disposée sous forme de spires, chaque spire (5) comprenant une portion de pompage.

9. Dispositif selon l'une des revendications précédentes,
**caractérisé en ce que** la fibre présente un cœur (4) ayant le milieu optiquement actif et une gaine (3) entourant le cœur et ayant la paroi latérale (10), dont l'indice de réfraction est adapté à l'indice de réfraction du guide d'onde optique (1).

10. Dispositif selon l'une des revendications précédentes,
**caractérisé en ce que** la partie d'injection (9) est un prisme d'injection.

11. Dispositif selon l'une des revendications précédentes,
**caractérisé en ce que** la partie d'injection (9) recouvre deux fibres optiques (1) ou plus, disposées les unes à côté des autres dans une direction transversale.

12. Dispositif selon l'une des revendications précédentes,
**caractérisé en ce que** deux guides d'onde optique ou plus sont fixés les uns à côté des autres sur un substrat commun (7), la transition entre les guides d'onde optique (1) et le substrat (7) étant conçue de telle sorte qu'une réflexion totale se produit à l'intérieur des guides d'onde optique (1) au niveau de la transition.

13. Procédé de fabrication d'un dispositif selon l'une des revendications 1 à 12,
**caractérisé en ce que** des guides d'onde optique (1) s'étendant les uns à côté des autres sont générés dans une plaquette (wafer) en forme de plaque qui présente une couche en un matériau optiquement transparent dans lequel sont fabriqués les guides d'onde optique, et une autre couche de stabilisation, et ensuite une fibre (2) ayant un cœur (4) optiquement actif est introduite par coopération de forme dans les intervalles formés entre les guides d'onde optique (1), et
une partie d'injection (9) ayant une surface d'appui plane est appliquée contre une surface latérale plane (16) dudit au moins un guide d'onde optique, pour injecter de la lumière de pompage dans le guide d'onde optique.

14. Procédé selon la revendication 13,
**caractérisé en ce que** les guides d'onde optique (1) sont réalisés dans la plaquette par des procédés d'ablation au laser, de gravure et/ou d'usinage mécanique tels que le fraisage ou le sciage.

15. Procédé selon la revendication 13 ou 14,
**caractérisé en ce qu'**avant l'introduction de la fibre (2), un milieu (14) adapté à l'indice de réfraction, de préférence sous forme de gel, est introduit dans les intervalles entre les guides d'onde optique (1).
